# EUROPÄISCHE PATENTSCHRIFT

(11) **EP 2 909 248 B1**
(45) Veröffentlichungstag und Bekanntmachung des Hinweises auf die Patenterteilung: **30.08.2017**
(21) Anmeldenummer: 13776494.0
(22) Anmeldetag: 14.10.2013
(51) Int. Cl.: C08G 18/66, C08G 18/42, C08G 18/44

(54) **HERSTELLUNG UND VERWENDUNG NEUER THERMOPLASTISCHER POLYURETHAN-ELASTOMERE AUF BASIS VON POLYETHERCARBONATPOLYOLEN**
PRODUCTION AND USE OF NEW THERMOPLASTIC POLYURETHANE ELASTOMERS BASED ON POLYETHER CARBONATE POLYOLS
PRODUCTION ET UTILISATION DE NOUVEAUX ÉLASTOMÈRES DE POLYURÉTHANE THERMOPLASTIQUES À BASE DE POLYÉTHERCARBONATE POLYOLS

(30) Priorität: 16.10.2012 DE 102012218846
(43) Veröffentlichungstag der Anmeldung: 26.08.2015
(73) Patentinhaber: Covestro Deutschland AG, 51373 Leverkusen (DE)
(72) Erfinder: WAMPRECHT, Gürtler, Neuss 41472 (DE); KAUFHOLD, Wolfgang, 51061 Köln (DE); GÜRTLER, Christoph, 50735 Köln (DE)
(74) Vertreter: Levpat
(86) Internationale Anmeldenummer: PCT/EP2013/071416
(87) Internationale Veröffentlichungsnummer: WO 2014/060348

(56) Entgegenhaltungen:
- US-A1- 2004 092 699
- US-A1- 2012 095 122
- US-B2- 6 987 160

## Beschreibung

Die Erfindung betrifft ein Verfahren zur Herstellung eines auf Polyethercarbonatpolyolen basierenden thermoplastischen Polyurethan-Elastomers. Weitere Gegenstände der Erfindung sind ein nach dem erfindungsgemäßen Verfahren hergestelltes thermoplastisches Polyurethan-Elastomer, dessen Verwendung zur Herstellung von Extrusions- oder Spritzgussartikeln, sowie die durch Extrusion oder Spritzguss hergestellten Artikel.

Thermoplastische Polyurethan-Elastomere (TPU) sind von großer technischer Bedeutung, weil sie ausgezeichnete mechanische Eigenschaften besitzen und sich kostengünstig thermoplastisch verarbeiten lassen. Durch die Verwendung unterschiedlicher chemischer Aufbaukomponenten lassen sich ihre mechanischen Eigenschaften über einen großen Bereich variieren. Zusammenfassende Darstellungen von TPU, ihren Eigenschaften und Anwendungen finden sich in Kunststoffe 68 (1978), S. 819-825 und Kautschuk, Gummi, Kunststoffe 35 (1982), S. 568-584.

TPU werden aus linearen Polyolen, meist Polyester-, Polyether- oder Polycarbonatpolyolen, organischen Diisocyanaten und kurzkettigen Verbindungen mit zwei Isocyanatreaktiven Gruppen (Kettenverlängerer) aufgebaut. Zur Beschleunigung der Bildungsreaktion können zusätzlich Katalysatoren zugesetzt werden. Die molaren Verhältnisse der Aufbaukomponenten können über einen breiten Bereich variiert werden, wodurch sich die Eigenschaften des Produkts einstellen lassen. Je nach molaren Verhältnissen von Polyolen zu Kettenverlängerern ergeben sich Produkte in einem weiten Shore-Härte-Bereich. Der Aufbau der thermoplastisch verarbeitbaren Polyurethan-Elastomeren kann entweder schrittweise (Präpolymerverfahren) oder durch die gleichzeitige Reaktion aller Komponenten in einer Stufe erfolgen (One-Shot-Verfahren). Die TPU können kontinuierlich oder diskontinuierlich hergestellt werden. Die bekanntesten technischen Herstellverfahren sind das Bandverfahren und das Extruderverfahren.

TPU auf Basis von Polyethylenoxid- und/oder Polypropylenoxidpolyolen (C2- bzw. C3-Polyetherpolyole), welche durch bekannte Verfahren unter KOH- oder Multimetallcyanid-Katalyse (DMC-Katalyse) durch Polymerisation von Ethylenoxid und/oder Propylenoxid hergestellt werden können, zeichnen sich durch ein gutes Gesamteigenschaftsbild aus. Insbesondere die schnelle Verfestigungsgeschwindigkeit nach dem Spritzguss, sowie die sehr gute Hydrolyse- und Mikrobenbeständigkeit der dadurch gefertigten Gebrauchsteile sind erwähnenswert. Verbesserungsbedürftig sind solche TPU-Materialien hinsichtlich der mechanischen Eigenschaften, wie z. B. der Zugfestigkeit, der Zugdehnung und Abriebbeständigkeit sowie der thermischen Eigenschaften, wie z. B. der Wärmebeständigkeit.
Derartige Verbesserungen können bisher beispielsweise durch die Verwendung von Polyesterpolyolen, Polycarbonatpolyolen oder C4-Polyetherpolyolen (Polytetramethylenglykole) erzielt werden. Die beiden letztgenannten polymeren Polyole sind jedoch aufwendig in ihrem Herstellungsverfahren und bestehen aus zum Teil teuren Edukten, weshalb sie auch deutlich teurer als C2- oder C3-Polyetherpolyole sind. Polyesterpolyole haben den Nachteil der Hydrolyseanfälligkeit.

Die DE 10147711 A beschreibt ein Verfahren zur Herstellung von Polyetheralkoholen aus Oxiranverbindungen in Gegenwart von DMC-Katalysatoren und eines Moderatorgases, wie z. B. Kohlendioxid, Kohlenmonoxid, Wasserstoff und Distickstoffoxid. Die verwendeten niedrigen Drücke während der Synthese führen zu einem maximalen Einbau an CO₂ von 20 mol%, so dass kaum Carbonateinheiten in den Polyetherpolyolen vorhanden sind. Die erhaltenen Polyetherpolyole können auch zur Herstellung von thermoplastischen Polyurethan-Elastomeren verwendet werden, allerdings kann durch den sehr geringen Anteil an Carbonateinheiten nicht von einer Verbesserung der Eigenschaften ausgegangen werden.

S. Xu und M. Zhang beschreiben in J. Appl. Polym Sci. 2007, Vol. 104, S. 3818-3826 die zweistufige Herstellung von Elastomeren, basierend auf Polyethylencarbonatpolyolen, die durch Copolymerisation von Ethylenoxid mit CO₂ in Gegenwart eines polymergeträgerten Bimetallkatalysators hergestellt werden. Der hohe Anteil der aus dem Ethylenoxid resultierenden Einheiten im Elastomer führt zu einer sehr starken Hydrophilie, die diese Stoffe ungeeignet für viele Anwendungsbereiche macht.

Die WO2010/115567 A beschreibt die Herstellung von mikrozelluären Elastomeren durch Umsetzung von einem NCO-terminierten Präpolymer, hergestellt aus einem Isocyanat und einem ersten Polyol, mit einem zweiten Polyol, das ein zahlenmittleres Molekulargewicht Mₙ von 1000 bis 10000 g/mol und einem Kettenverlängerer mit einem Molekulargewicht von unter 800 g/mol. Die mikrozelluläre Struktur wird durch den Einsatz von chemischen oder physikalischen Treibmitteln, wie beispielsweise Wasser erzeugt. Als Polyole können Polyethercarbonatpolyole eingesetzt werden, die durch Copolymerisation von CO₂ und Alkylenoxiden hergestellt werden. Mikrozelluläre Strukturen, hervorgerufen durch den Einsatz von Treibmitteln, sind bei der Verarbeitung von TPU in Spritzgießmaschinen und bei Extrusionsverfahren nicht erwünscht, weil dadurch das mechanische Eigenschaftsniveau, insbesondere die Zugfestigkeit und die Bruchdehnung, verschlechtert wird, bzw. bei der Herstellung von Folien Fehlstellen entstehen.

Aus der EP 1 707 586 A US 2004/0092699 A1 ist die mehrstufige Herstellung von Polyurethanharzen bekannt, welche auf Polyethercarbonatdiolen basieren, die durch Umesterung von Carbonatestern, wie z. B. Dimethylcarbonat mit Polyetherdiolen, die ein Molekulargewicht unter 500 g/mol aufweisen, hergestellt werden. Die Herstellung der Produkte erfolgt durch aufwendige, 2 stufige Synthese. Aufgrund dieses langwierige Umesterungsverfahrens kommt es häufig zu unerwünschten Produktverfärbungen und aufgrund von Nebenreaktionen (Wasserabspaltung unter Doppelbindungsbildung) zu OH-Funktionalitäten < 2 (meist 1,92 bis 1,96), sodass TPU-Produkte mit geringerem Molekulargewicht entstehen. Dadurch ist dann auch das mechanische Eigenschaftsniveau geringer als bei Glykolen mit hoher OH-Funktionalität (1,98 bis 2,00).

Aufgabe der vorliegenden Erfindung war es daher, ein Verfahren zur Herstellung von kostengünstigen thermoplastischen Polyurethan-Elastomeren, die ein gutes Gesamteigenschaftsprofil und zusätzlich ein besonders hohes mechanisches Eigenschaftsniveau aufweisen und somit für ein breites Anwendungsspektrum geeignet sind, zur Verfügung zu stellen. Insbesondere sollen die hergestellten TPU, neben einer erhöhten Zugfestigkeit besonders geringe Abriebswerte und eine verbesserte Wärmebeständigkeit im Vergleich zu den aus dem Stand der Technik bekannten entsprechenden TPU auf Basis reiner C2- oder C3-Polyetherpolyole aufweisen.

Diese Aufgabe wird erfindungsgemäß gelöst durch ein Verfahren zur Herstellung eines thermoplastischen Polyurethan-Elastomers umfassend die Umsetzung von wenigstens
A) einem organisches Diisocyanat enthaltend zwei Isocyanatgruppen mit
B) einem Polyol mit einem zahlenmittlerem Molekulargewicht von ≥ 500 und ≤ 5000 g/mol, das mindestens zwei Isocyanat-reaktive Gruppen aufweist und
C) einem Kettenverlängerer mit einem Molekulargewicht von ≥ 60 und ≤ 490 g/mol, die zwei Isocyanat-reaktive Gruppen aufweisen
   und gegebenenfalls
D) einem monofunktionellen Kettenabbrecher, der eine Isocyanat-reaktive Gruppe aufweist und / oder
E) einem Katalysator,
wobei das Molverhältnis der Isocyanatgruppen aus A) zu der Summe der gegenüber Isocyanat reaktiven Gruppen in B), C) und gegebenenfalls D) ≥ 0,9:1 und ≤ 1,2:1 beträgt,
und die Komponente B) wenigstens ein Polyethercarbonatpolyol enthält, welches durch Anlagerung von Kohlendioxid und Alkylenoxiden an H-funktionelle Startsubstanzen erhältlich ist.

Es hat sich überraschender Weise gezeigt, dass die nach dem erfindungsgemäßen Verfahren hergestellten TPU gute mechanische Eigenschaften aufweisen. Insbesondere ist eine höhere Zugfestigkeit und eine bessere Wärmebeständigkeit als bei entsprechenden TPU auf Basis reiner C2- oder C3-Polyetherpolyole zu beobachten und auch die Abriebwerte sind deutlich geringer. Auch bei niedrigen Temperaturen haben die erfindungsgemäß hergestellten TPU noch sehr gute elastische Eigenschaften, weil keine Weichsegmentkristallisation auftritt.

Unter thermoplastischen Polyurethan-Elastomeren werden im Sinne der Erfindung thermoplastisch verarbeitbare Elastomere, die Urethaneinheiten enthalten, verstanden. Dabei handelt es sich um lineare mehrphasige Blockcopolymere, die aus sogenannten Hart- und Weichsegmenten aufgebaut sind.
Unter Hartsegmenten versteht man solche Segmente, die durch die starren Blöcke des Copolymers, welche durch Reaktion von kurzkettigen Kettenverlängerern und Diisocyanaten entstehen, ausgebildet werden. Diese Blöcke sind geordnet, was durch eine physikalische Wechselwirkung mit den Kettenverlängerer-Blöcken der Nachbarpolymerkette möglich wird. Diese Wechselwirkungen stellen die Netzpunkte für das elastische Verhalten dar. Gleichzeitig sind diese reversibel aufschmelzenden Netzpunkte die Vorraussetzung für das thermoplastische Verhalten.

Durch Reaktion der längerkettigen Polyolkomponenten mit Diisocyanaten entstehen flexible Blöcke im Copolymer, welche die ungeordneten Weichsegmente ausbilden. Diese sind verantwortlich für die chemische Eigenschaften, sowie die Kälteflexibilität des TPU.

Als organische **Diisocyanate A)** kommen beispielsweise Diisocyanate in Betracht, wie sie in Justus Liebigs Annalen der Chemie, 562, S. 75-136 beschrieben werden.

Im Einzelnen seien beispielhaft genannt:
Aromatische Diisocyanate, wie 2,4-Toluylendiisocyanat, Gemische aus 2,4-Toluylendiisocyanat und 2,6-Toluylendiisocyanat, 4,4'-Diphenylmethandiisocyanat, 2,4'-Diphenylmethandiisocyanat und 2,2'-Diphenylmethandiisocyanat, Gemische aus 2,4'-Diphenylmethandiisocyanat und 4,4'-Diphenylmethandiisocyanat, urethanmodifizierte flüssige 4,4'-Diphenylmethandiisocyanate und 2,4'-Diphenylmethandiisocyanate, 4,4'-Düsocyanatodiphenyl-ethan-(1,2) und 1,5-Naphthylendiisocyanat. Vorzugsweise verwendet werden als aromatische organische Diisocyanate Diphenylmethandiisocyanat-Isomerengemische mit einem 4,4'-Diphenylmethandiisocyanatgehalt von >96 Gew.-% und insbesondere 4,4'-Diphenylmethandiisocyanat und 1,5-Naphthylendiisocyanat. Die genannten Diisocyanate können einzeln oder in Form von Mischungen untereinander zur Anwendung kommen. Sie können auch zusammen mit bis zu 15 Gew.-% (berechnet auf die Gesamtmenge an Diisocyanat) eines Polyisocyanates verwendet werden, beispiels-weiseTriphenylmethan-4,4',4"-triisocyanat oder Polyphenylpoly methylenpolyisocyanaten.

Als weitere Diisocyanate A) können aliphatische und cycloaliphatische Diisocyanate eingesetzt werden. Beispielhaft seien genannt Hexamethylendiisocyanat, Isophorondiisocyanat, 1,4-Cyclohexandiisocyanat, 1-Methyl-2,4-Cyclohexandiisocyanat und 1-Methyl-2,6-Cyclohexandiisocyanat sowie die entsprechenden Isomerengemische und 4,4'-, 2,4'- und 2,2'-Dicyclohexylmethandiisocyanat sowie die entsprechenden Isomerengemische. Bevorzugt besteht das eingesetzte aliphatisch organische Diisocyanat zu mindestens 50 Gew.-%, vorzugsweise 75 Gew.-% und besonders bevorzugt zu 100 Gew.-% aus 1,6-Hexamethylendiisocyanat.

Gemäß einer bevorzugten Ausführungsform der Erfindung umfasst das organische Diisocyanat A) wenigstens eine Verbindung ausgewählt aus der Gruppe aliphatische, aromatische, cycloaliphatische Diisocyanate und besonders bevorzugt wenigstens ein aliphatisches und/oder ein cycloaliphatisches Diisocyanat, ganz besonders bevorzugt wenigstens ein aliphatisches Diisocyanat.

Die **Komponente B)** enthält erfindungsgemäß wenigstens ein **Polyethercarbonatpolyol,** welches durch Anlagerung von Kohlendioxid und Alkylenoxiden an H-funktionelle Startsubstanzen erhältlich ist. Unter "H-funktionell" wird im Sinne der Erfindung eine Starterverbindung verstanden, die gegenüber Alkoxylierung aktive H-Atomen aufweist.

Die Herstellung von Polyethercarbonatpolyolen durch Anlagerung von Alkylenoxiden und CO₂ an H-funktionelle Starter ist beispielsweise aus der EP 0222453 A, WO 2008/013731 A und EP 2115032 A bekannt.

In einer bevorzugten Ausführungsform der Erfindung weist das Polyethercarbonatpolyol einen Gehalt an Carbonatgruppen, berechnet als CO₂, von ≥ 3 und ≤ 35 Gew.-%, bevorzugt von ≥ 5 und ≤ 30 Gew.-% und besonders bevorzugt von ≥ 10 und ≤ 28 Gew.-% auf. Die Bestimmung erfolgt mittels NMR gemäß der im Methodenteil genannten Analysenmethode.

In einer weiteren bevorzugten Ausführungsform der Erfindung hat das Polyethercarbonatpolyol ein zahlenmittleres Molekulargewicht Mₙ von ≥ 500 und ≤ 10000 g/mol, bevorzugt ≥ 500 und ≤ 7500 g/mol, besonders bevorzugt ≥ 750 und ≤ 6000 g/mol und ganz besonders bevorzugt ≥ 1000 und ≤ 5000 g/mol. Die Bestimmung erfolgt mittels Titration der OH-Endgruppen gemäß der im Methodenteil unter OH-Zahl Bestimmung genannten Analysenmethode.

Vorzugsweise hat das Polyethercarbonatpolyol eine mittlere OH-Funktionalität von ≥ 1,90 und ≤ 2,30, insbesondere von ≥ 1,93 und ≤ 2,20, besonders bevorzugt ≥ 1,96 und ≤ 2,05 und ganz besonders bevorzugt ≥ 1,98 und ≤ 2,02.

Allgemein können zur Herstellung der Polyethercarbonatpolyole **Alkylenoxide** (Epoxide) mit 2 bis 24 Kohlenstoffatomen eingesetzt werden. Bei den Alkylenoxiden mit 2 bis 24 Kohlenstoffatomen handelt es sich beispielsweise um eine oder mehrere Verbindungen ausgewählt aus der Gruppe bestehend aus Ethylenoxid, Propylenoxid, 1-Butenoxid, 2,3-Butenoxid, 2-Methyl-1,2-propenoxid (Isobutenoxid), 1-Pentenoxid, 2,3-Pentenoxid, 2-Methyl-1,2-butenoxid, 3-Methyl-1,2-butenoxid, 1-Hexenoxid, 2,3-Hexenoxid, 3,4-Hexenoxid, 2-Methyl-1,2-pentenoxid, 4-Methyl-1,2-pentenoxid, 2-Ethyl-1,2-butenoxid, 1-Heptenoxid, 1-Octenoxid, 1-Nonenoxid, 1-Decenoxid, 1-Undecenoxid, 1-Dodecenoxid, 4-Methyl-1,2-pentenoxid, Butadienmonoxid, Isoprenmonoxid, Cyclopentenoxid, Cyclohexenoxid, Cycloheptenoxid, Cyclooctenoxid, Styroloxid, Methylstyroloxid, Pinenoxid, ein- oder mehrfach epoxidierte Fette als Mono-, Di- und Triglyceride, epoxidierte Fettsäuren, C₁-C₂₄-Ester von epoxidierten Fettsäuren, Epichlorhydrin, Glycidol, und Derivate des Glycidols, wie beispielsweise Methylglycidylether, Ethylglycidylether, 2-Ethylhexylglycidylether, Allylglycidylether, Glycidylmethacrylat sowie epoxidfunktionelle Alkyoxysilane, wie beispielsweise 3-Glycidyloxypropyltrimethoxysilan, 3-Glycidyioxypropyltriethoxysilan, 3-Glycidyloxypropyltripropoxysilan, 3-Glycidyloxypropyl-methyl-dimethoxysilan, 3-Glycidyloxypropylethyldiethoxysilan, 3-Glycidyloxypropyltrlisopropoxysilan. Vorzugsweise werden als Alkylenoxide Ethylenoxid und/oder Propylenoxid, insbesondere Propylenoxid eingesetzt.

In einer besonders bevorzugten Ausführungsform der Erfindung liegt der Anteil an Ethylenoxid an der gesamt eingesetzten Menge der Alkylenoxide ≥ 0 und ≤ 90 Gew.-%, bevorzugt ≥ 0 und ≤ 50 Gew.-% und besonders bevorzugt ≥ 0 und ≤ 25 Gew.-%.

Als geeignete **H-funktionelle Startsubstanz** können Verbindungen mit für die Alkoxylierung aktiven H-Atomen eingesetzt werden. Für die Alkoxylierung aktive Gruppen mit aktiven H-Atomen sind beispielsweise -OH, -NH₂ (primäre Amine), -NH- (sekundäre Amine), -SH und -CO₂H, bevorzugt sind -OH und -NH₂, besonders bevorzugt ist -OH. Als H-funktionelle Startersubstanz wird beispielsweise eine oder mehrere Verbindungen ausgewählt aus der Gruppe bestehend aus mehrwertige Alkohole, mehrwertige Amine, mehrwertige Thiole, Aminoalkohole, Thioalkohole, Hydroxyester, Polyetherpolyole, Polyesterpolyole, Polyesteretherpolyole, Polyethercarbonatpolyole, Polycarbonatpolyole, Polycarbonate, Polyethylenimine, Polyetheramine (z. B. sogenannte Jeffamine^{®} von Huntsman), Polytetrahydrofurane (z. B. PolyTHF^{®} der BASF, wie z. B. PolyTHF^{®} 250, 650S, 1000, 1000S, 1400, 1800, 2000), Polytetrahydrofuranamine (BASF Produkt Polytetrahydrofuranamin 1700), Polyetherthiole, Polyacrylatpolyole, Ricinusöl, das Mono- oder Diglycerid von Ricinolsäure, Monoglyceride von Fettsäuren, chemisch modifizierte Mono-, Di- und/oder Triglyceride von Fettsäuren, und C₁-C₂₄ Alkyl-Fettsäureester, die im Mittel mindestens zwei OH-Gruppen pro Molekül enthalten, eingesetzt. Beispielhaft handelt es sich bei den C₁-C₂₄ Alkyl-Fettsäureester, die im Mittel mindestens zwei OH-Gruppen pro Molekül enthalten, um Handelsprodukte wie Lupranol Balance^{®} (Fa. BASF AG), Merginol^{®}-Typen (Fa. Hobum Oleochemicals GmbH), Sovermol^{®}-Typen (Fa. Cognis Deutschland GmbH & Co. KG) und Soyol^{®}TM-Typen (Fa. USSC Co.).

Als H-funktionelle Startersubstanzen geeignete mehrwertige Alkohole sind beispielsweise zweiwertige Alkohole, wie z.B. Ethylenglykol, Diethylenglykol, Propylenglykol, Dipropylenglykol, 1,3-Propandiol, 1,4-Butandiol, 1,4-Butendiol, 1,4-Butindiol, Neopentylglykol, 1,5-Pentantandiol, Methylpentandiole (wie z.B. 3-Methyl-1,5-pentandiol), 1,6-Hexandiol; 1,8-Octandiol, 1,10-Decandiol, 1,12-Dodecandiol, Bis-(hydroxymethyl)-cyclohexane (wie z.B. 1,4-Bis-(hydroxymethyl)cyclohexan), Triethylenglykol, Tetraethylenglykol, Polyethylenglykol, Dipropylenglykol, Tripropylenglykol, Polypropylenglykol, Dibutylenglykol und Polybutylenglykole, sowie alle Modifizierungsprodukte dieser zuvorgenannten Alkohole mit unterschiedlichen Mengen an ε-Caprolacton. In Mischungen von H-funktionellen Startern können auch dreiwertige Alkohole, wie beispielsweise Trimethylolpropan, Glycerin, Trishydroxyethylisocyanurat und Rizinusöl eingesetzt werden.

Die H-funktionellen Startersubstanzen können auch aus der Substanzklasse der Polyetherpolyole ausgewählt sein, insbesondere solchen mit einem zahlenmittleren Molekulargewicht Mₙ im Bereich von 200 bis 4000 g/mol, vorzugsweise 250 bis 2000 g/mol. Bevorzugt sind Polyetherpolyole, die aus sich wiederholenden Ethylenoxid- und Propylenoxideinheiten aufgebaut sind, bevorzugt mit einem Anteil von 35 bis 100% Propylenoxideinheiten, besonders bevorzugt mit einem Anteil von 50 bis 100% Propylenoxideinheiten. Hierbei kann es sich um statistische Copolymere, Gradienten-Copolymere, alternierende oder Blockcopolymere aus Ethylenoxid und Propylenoxid handeln. Geeignete Polyetherpolyole, aufgebaut aus sich wiederholenden Propylenoxid- und/oder Ethylenoxideinheiten sind beispielsweise die Desmophen^{®}-, Acclaim^{®}-, Arcol^{®}-, Baycoll^{®}-, Bayfill^{®}-, Bayflex^{®}- Baygal^{®}-, PET^{®}- und Polyether-Polyole der Bayer MaterialScience AG (wie z. B. Desmophen^{®} 3600Z, Desmophen^{®} 1900U, Acclaim^{®} Polyol 2200, Acclaim^{®} Polyol 4000I, Arcol^{®} Polyol 1004, Arcol^{®} Polyol 1010, Arcol^{®} Polyol 1030, Arcol^{®} Polyol 1070, Baycoll^{®} BD 1110, Bayfill^{®} VPPU 0789, Baygal^{®} K55, PET^{®} 1004, Polyether^{®} S180). Weitere geeignete homo-Polyethylenoxide sind beispielsweise die Pluriol^{®} E-Marken der BASF SE, geeignete homo-Polypropylenoxide sind beispielsweise die Pluriol^{®} P-Marken der BASF SE, geeignete gemischte Copolymere aus Ethylenoxid und Propylenoxid sind beispielsweise die Pluronic^{®} PE oder Pluriol^{®} RPE-Marken der BASF SE.

Die H-funktionelle Startersubstanzen können auch aus der Substanzklasse der Polyesterpolyole ausgewählt sein, insbesondere solchen mit einem zahlenmittleren Molekulargewicht Mₙ im Bereich von 200 bis 4500 g/mol, vorzugsweise 400 bis 2500 g/mol. Als Polyesterpolyole werden mindestens difunktionelle Polyester eingesetzt. Bevorzugt bestehen Polyesterpolyole aus alternierenden Säure- und Alkoholeinheiten. Als Säurekomponenten werden z. B. Bernsteinsäure, Maleinsäure, Maleinsäureanhydrid, Adipinsäure, Phthalsäureanhydrid, Phthalsäure, Isophthalsäure, Terephthalsäure, Tetrahydrophtalsäure, Tetrahydrophthalsäureanhydrid, Hexahydrophthalsäureanhydrid oder Gemische aus den genannten Säuren und/oder Anhydride eingesetzt. Als Alkoholkomponenten werden z. B. 1,2-Ethandiol, 1,2-Propandiol, 1,3-Propandiol, 1,4-Butandiol, 1,5-Pentandiol, Neopentylglykol, 1,6-Hexandiol, 1,4-Bis-(hydroxymethyl)-cyclohexan, Diethylenglykol, Dipropylenglykol, Trimethylolpropan, Glycerin oder Gemische aus den genannten Alkoholen verwendet. Werden als Alkoholkomponente zweiwertige oder mehrwertige Polyetherpolyole eingesetzt, so erhält man Polyesteretherpolyole die ebenfalls als Startersubstanzen zur Herstellung der Polyethercarbonatpolyole dienen können. Falls Polyetherpolyole zur Herstellung der Polyesteretherpolyole eingesetzt werden, sind Polyetherpolyole mit einem zahlenmittleren Molekulargewicht Mₙ von 150 bis 2000 g/mol bevorzugt.

Des Weiteren können als H-funktionelle Startersubstanzen Polycarbonatpolyole, wie beispielsweise Polycarbonatdiole, eingesetzt werden, insbesondere solchen mit einem zahlenmittleren Molekulargewicht Mₙ im Bereich von 150 bis 4500 g/mol, vorzugsweise 500 bis 2500, die beispielsweise durch Umsetzung von Phosgen, Dimethylcarbonat, Diethylcarbonat oder Diphenylcarbonat und di- und/oder polyfunktionellen Alkoholen oder Polyesterpolyolen oder Polyetherpolyolen hergestellt werden. Beispiele zu Polycarbonatpolyolen finden sich z. B. in der EP 1359177 A. Beispielsweise können als Polycarbonatdiole die Desmophen^{®} C-Typen der Bayer MaterialScience AG verwendet werden, wie z. B. Desmophen^{®} C 1100 oder Desmophen^{®} C 2200.

Ebenfalls können Polyethercarbonatpolyole als H-funktionelle Startersubstanzen eingesetzt werden. Insbesondere werden Polyethercarbonatpolyole, die nach dem hier beschriebenen Verfahren hergestellt werden eingesetzt. Diese als H-funktionelle Startersubstanzen eingesetzten Polyethercarbonatpolyole werden hierzu in einem separaten Reaktionsschritt zuvor hergestellt.

Die H-funktionellen Startersubstanzen weisen im Allgemeinen eine Funktionalität (d.h. Anzahl an für die Polymerisation aktiven H-Atome pro Molekül) von 1 bis 4, bevorzugt von 2 oder 3 und besonders bevorzugt von 2 auf. Die H-funktionellen Startersubstanzen werden entweder einzeln oder als Gemisch aus mindestens zwei H-funktionellen Startersubstanzen eingesetzt.

Bevorzugte H-funktionelle Startersubstanzen sind Alkohole der allgemeinen Formel (I),

HO-(CH₂)ₓ-OH (I)

wobei x eine Zahl von 1 bis 20, bevorzugt eine gerade Zahl von 2 bis 20 ist. Beispiele für Alkohole gemäß Formel (I) sind Ethylenglycol, 1,4-Butandiol, 1,6-Hexandiol, 1,8-Octandiol, 1,10 Decandiol und 1,12-Dodecandiol. Weitere bevorzugte H-funktionelle Startersubstanzen sind Neopentylglykol, Trimethylolpropan, Glycerin, Pentaerythrit, Umsetzungsprodukte der Alkohole gemäß Formel (I) mit ε-Caprolacton, z.B. Umsetzungsprodukte von Trimethylolpropan mit ε-Caprolacton, Umsetzungsprodukte von Glycerin mit ε-Caprolacton, sowie Umsetzungsprodukte von Pentaerythrit mit ε-Caprolacton. Weiterhin bevorzugt werden als H-funktionelle Startsubstanzen Wasser, Diethylenglykol, Dipropylenglykol, Rizinusöl, Sorbit und Polyetherpolyole, aufgebaut aus sich wiederholenden Polyalkylenoxideinheiten, eingesetzt.

Besonders bevorzugt handelt es sich bei den H-funktionellen Startersubstanzen um eine oder mehrere Verbindungen ausgewählt aus der Gruppe bestehend aus Ethylenglykol, Propylenglykol, 1,3-Propandiol, 1,3-Butandiol, 1,4-Butandiol, 1,5-Pentandiol, 2-Methylpropan-1,3-diol, Neopentylglykol, 1,6-Hexandiol, Diethylenglykol, Dipropylenglykol, Glycerin, Trimethylolpropan, di- und trifunktionelle Polyetherpolyole, wobei das Polyetherpolyol aus einer di- oder tri-H-funktionellen Startersubstanz und Propylenoxid bzw. einer di- oder tri-H-funktionellen Startersubstanz, Propylenoxid und Ethylenoxid aufgebaut ist. Die Polyetherpolyole haben bevorzugt ein zahlenmittleres Molekulargewicht Mₙ im Bereich von 62 bis 4500 g/mol und insbesondere ein zahlenmittleres Molekulargewicht Mₙ im Bereich von 62 bis 3000 g/mol, ganz besonders bevorzugt ein Molekulargewicht von 62 bis 1500 g/mol. Bevorzugt haben die Polyetherpolyole eine Funktionalität von 2 bis 3, besonders bevorzugt von 2.

In einer bevorzugten Ausführungsform der Erfindung ist das Polyethercarbonatpolyol durch Anlagerung von Kohlendioxid und Alkylenoxiden an H-funktionelle Startsubstanzen unter Verwendung von Multimetallcyanid-Katalysatoren (DMC-Katalysatoren) erhältlich. Die Herstellung von Polyethercarbonatpolyolen durch Anlagerung von Alkylenoxiden und CO₂ an H-funktionelle Starter unter Verwendung von DMC-Katalysatoren ist beispielsweise aus der EP 0222453 A, WO 2008/013731 A und EP 2115032 A bekannt.

**DMC-Katalysatoren** sind im Prinzip aus dem Stand der Technik zur Homopolymerisation von Epoxiden bekannt (siehe z.B. US 3 404 109 A, US 3 829 505 A, US 3 941 849 A und US 5 158 922 A). DMC-Katalysatoren, die z.B. in US 5 470 813 A, EP 700 949 A, EP 743 093 A, EP 761 708 A, WO 97/40086 A, WO 98/16310 A und WO 00/47649 A beschrieben sind, besitzen eine sehr hohe Aktivität in der Homopolymerisation von Epoxiden und ermöglichen die Herstellung von Polyetherpolyolen bei sehr geringen Katalysatorkonzentrationen (25 ppm oder weniger). Ein typisches Beispiel sind die in EP-A 700 949 beschriebenen hochaktiven DMC-Katalysatoren, die neben einer Doppelmetallcyanid-Verbindung (z.B. Zinkhexacyanocobaltat(III)) und einem organischen Komplexliganden (z.B. tert.-Butanol) noch einen Polyether mit einem zahlenmittlerem Molekulargewicht größer als 500 g/mol enthalten.

Der DMC-Katalysator wird zumeist in einer Menge von kleiner 1 Gew.-%, vorzugsweise in einer Menge von kleiner 0,5 Gew.-%, besonders bevorzugt in einer Menge von kleiner 500 ppm und insbesondere in einer Menge von kleiner 300 ppm, jeweils bezogen auf das Gewicht des Polyethercarbonatpolyols eingesetzt.

Die Herstellung der Polyethercarbonatpolyole erfolgt bevorzugt in einem Druckreaktor. Die Dosierung eines oder mehrerer Alkylenoxide und des Kohlendioxids erfolgt nach der optionalen Trocknung einer Startersubstanz oder der Mischung mehrerer Startersubstanzen und der Zugabe des DMC-Katalysators sowie das/der Additiv(e), die vor oder nach der Trocknung als Feststoff oder in Form einer Suspension zugegeben werden. Die Dosierung eines oder mehrerer Alkylenoxide und des Kohlendioxids kann prinzipiell in unterschiedlicher Weise erfolgen. Der Start der Dosierung kann aus dem Vakuum heraus oder bei einem zuvor gewählten Vordruck erfolgen. Der Vordruck wird bevorzugt durch Einleiten eines Inertgases, wie beispielsweise Stickstoff, eingestellt, wobei der Druck zwischen 10 mbar bis 5 bar, vorzugsweise 100 mbar bis 3 bar und bevorzugt 500 mbar bis 2 bar eingestellt wird.

Die Dosierung eines oder mehrerer Alkylenoxide und des Kohlendioxids kann simultan oder sequentiell erfolgen, wobei die gesamte Kohlendioxidmenge auf einmal oder dosiert über die Reaktionszeit zugegeben werden kann. Vorzugsweise erfolgt eine Dosierung des Kohlendioxids. Die Dosierung ein oder mehrerer Alkylenoxide erfolgt simultan oder sequentiell zur Kohlendioxid Dosierung. Werden mehrere Alkylenoxide zur Synthese der Polyethercarbonatpolyole eingesetzt, so kann deren Dosierung simultan oder sequentiell über jeweils separate Dosierungen erfolgen oder über eine oder mehrere Dosierungen, wobei mindestens zwei Alkylenoxide als Gemisch dosiert werden. Über die Art der Dosierung der Alkylenoxide und des Kohlendioxids ist es möglich, statistische, alternierende, blockartige oder gradientenartige Polyethercarbonatpolyole zu synthetisieren.

Vorzugsweise wird ein Überschuss an Kohlendioxid eingesetzt, insbesondere wird die Menge an Kohlendioxid über den Gesamtdruck bei Reaktionsbedingungen bestimmt. Bedingt durch die Reaktionsträgheit von Kohlendioxid ist ein Überschuss von Kohlendioxid von Vorteil. Es hat sich gezeigt, dass die Reaktion bei 60 bis 150 °C, bevorzugt bei 70 bis 140 °C, besonders bevorzugt bei 80 bis 130 °C und Drücken von 0 bis 100 bar, bevorzugt 1 bis 90 bar und besonders bevorzugt von 3 bis 80 bar die Polyethercarbonatpolyole erzeugt. Bei Temperaturen unterhalb von 60 °C kommt die Reaktion zum Erliegen. Bei Temperaturen oberhalb von 150 °C steigt die Menge an unerwünschten Nebenprodukten stark an.

Der Anteil an Polyethercarbonatpolyolen an der Gesamtmasse der Komponente B) beträgt vorzugsweise ≥ 5 und ≤ 100 Gew.-%, besonders bevorzugt ≥ 20 und ≤ 100% Gew.-% und ganz besonders bevorzugt ≥ 40 und ≤ 100 Gew.-%. Es können auch verschiedene Polyethercarbonatpolyole in der Komponente B) enthalten sein.

Als Komponente B) können auch Gemische der oben genannten Polyethercarbonatpolyole mit weiteren linearen hydroxylterminierten Polyolen mit einem zahlenmittleren Molekulargewicht Mₙ von 500 bis 5000 g/mol, vorzugsweise 750 bis 4000 g/mol und besonders bevorzugt 1000 bis 3000 g/mol, eingesetzt werden. Produktionsbedingt enthalten diese oft geringe Mengen an nichtlinearen Verbindungen. Häufig spricht man daher auch von "im Wesentlichen linearen Polyolen". Bevorzugt als weitere Polyole sind Polyester-, Polyether-, Polycarbonatdiole oder Gemische aus diesen.

Geeignete Polyetherdiole können dadurch hergestellt werden, dass man ein oder mehrere Alkylenoxide mit 2 bis 4 Kohlenstoffatomen im Alkylenrest mit einem Startermolekül, das zwei aktive Wasserstoffatome gebunden enthält, umsetzt. Als Alkylenoxide seien z.B. genannt: Ethylenoxid, 1,2-Propylenoxid, Epichlorhydrin und 1,2-Butylenoxid und 2,3-Butylenoxid. Vorzugsweise werden Ethylenoxid, Propylenoxid und Mischungen aus 1,2-Propylenoxid und Ethylenoxid eingesetzt. Die Alkylenoxide können einzeln, alternierend nacheinander oder als Mischungen verwendet werden. Als Startermoleküle kommen beispielsweise in Betracht: Wasser, Aminoalkohole, wie N-Alkyl-diethanolamine, beispielsweise N-Methyl-diethanol-amin, und Diole, wie Ethylenglykol, 1,3-Propylenglykol, 1,4-Butandiol und 1,6-Hexandiol. Gegebenenfalls können auch Mischungen von Startermolekülen eingesetzt werden. Geeignete Polyetherdiole sind ferner die hydroxylgruppenhaltigen Polymerisationsprodukte des Tetrahydrofurans. Es können auch trifunktionelle Polyether in Anteilen von 0 bis 30 Gew.-%, bezogen auf die bifunktionellen Polyether, eingesetzt werden, jedoch höchstens in solcher Menge, dass ein thermoplastisch verarbeitbares Produkt entsteht. Geeignete Polyetherdiole besitzen ein zahlenmittleres Molekulargewichte Mₙ von 500 bis 6000 g/mol, vorzugsweise 750 bis 4000 g/mol und ganz besonders bevorzugt 1000 bis 3000 g/mol. Sie können sowohl einzeln als auch in Form von Mischungen untereinander zur Anwendung kommen.

Geeignete Polyesterdiole können beispielsweise aus Dicarbonsäuren mit 2 bis 12 Kohlenstoffatomen, vorzugsweise 4 bis 6 Kohlenstoffatomen, und mehrwertigen Alkoholen hergestellt werden. Als Dicarbonsäuren kommen beispielsweise in Betracht: aliphatische Dicarbonsäuren, wie Bernsteinsäure, Maleinsäure, Glutarsäure, Adipinsäure, Korksäure, Azelainsäure und Sebacinsäure und aromatische Dicarbonsäuren, wie Phthalsäure, Isophthalsäure und Terephthalsäure. Die Dicarbonsäuren können einzeln oder als Gemische, z.B. in Form einer Bernstein-, Glutar- und Adipinsäuremischung, verwendet werden. Zur Herstellung der Polyester-Diole kann es gegebenenfalls vorteilhaft sein, anstelle der Dicarbonsäuren die entsprechenden Dicarbonsäurederivate, wie Carbonsäurediester mit 1 bis 4 Kohlenstoffatomen im Alkoholrest, Carbonsäureanhydride oder Carbonsäurechloride zu verwenden. Beispiele für mehrwertige Alkohole sind Glykole mit 2 bis 10, vorzugsweise 2 bis 6 Kohlenstoffatomen, wie Ethylenglykol, Diethylenglykol, 1,4-Butandiol, 1,5-Pentandiol, 1,6-Hexandiol, 1,10-Decandiol, 1,12-Dodecandiol, 2,2-Dimethyl-1,3-propandiol, 1,3-Propandiol und Dipropylenglykol. Je nach den gewünschten Eigenschaften können die mehrwertigen Alkohole allein oder gegebenenfalls in Mischung untereinander verwendet werden. Geeignet sind ferner Ester der Kohlensäure mit den genannten Diolen, insbesondere solchen mit 4 bis 6 Kohlenstoffatomen, wie 1,4-Butandiol oder 1,6-Hexandiol, Kondensationsprodukte von Hydroxycarbonsäuren, beispielsweise Hydroxycapronsäure und Polymerisationsprodukte von Lactonen, beispielsweise gegebenenfalls substituierten Caprolactonen. Als Polyesterdiole vorzugsweise verwendet werden Ethandiol-polyadipate, 1,4-Butandiol-polyadipate, Ethandiol-1,4-butandiol-polyadipate, 1,6-Hexandiol-neopentylglykol-polyadipate, 1,6-Hexandiol-1,4-butandiol-polyadipate und Polycaprolactone. Die Polyester-Diole besitzen ein zahlenmittleres Molekulargewicht Mₙ von 500 bis 5000 g/mol, vorzugsweise 600 bis 4000 g/mol und besonders bevorzugt 800 bis 3000 g/mol und können einzeln oder in Form von Mischungen untereinander zur Anwendung kommen.

Als **Kettenverlängerer C)** können niedermolekulare Verbindungen mit einem Molekulargewicht von ≥ 60 und ≤ 490 g/mol, bevorzugt ≥ 62 und ≤ 400 g/mol und besonders bevorzugt ≥ 62 und ≤ 300 g/mol eingesetzt werden, die zwei Isocyanat-reaktive Gruppen aufweisen.

In einer bevorzugten Ausführungsform der Erfindung enthalten oder bestehen die Kettenverlängerer C) aus Diolen, Diaminen oder Diol/Diamin Gemischen, jedoch bevorzugt aus Diolen.

Geeignete Kettenverlängerer sind Diole wie beispielsweise Ethandiol, 1,3-Propandiol, 1,4-Butandiol, 1,5-Pentandiol, 1,6-Hexandiol, 1,8-Octandiol, 1,10-Decandiol, 1,12-Dodecandiol, Diethylenglykol, Dipropylenglykol, Neopentylglykol, Diester der Terephthalsäure mit Glykolen mit 2 bis 4 Kohlenstoffatomen, wie beispielsweise Terephthalsäure-bis-ethylenglykol oder Terephthalsäure-bis-1,4-butandiol, Hydroxyalkylenether des Hydrochinons, wie beispielsweise 1,4-Di(-hydroxyethyl)-hydrochinon und ethoxylierte Bisphenole sowie deren Umsetzungsprodukte mit ε-Caprolacton.

Bevozugte Kettenverlängerer sind aliphatische Diole mit 2 bis 14 Kohlenstoffatomen, wie beispielsweise Ethandiol, 1,3-Propandiol, 1,4-Butandiol 1,5-Pentandiol, 1,6-Hexandiol, 1,8-Octandiol, 1,10-Decandiol, 1,12-Dodecandiol, Diethylenglykol, Dipropylenglykol, Neopentylglykol und 1,4-Di(-hydroxyethyl)-hydrochinon. Besonders bevorzugt werden 1,3-Propandiol, 1,4-Butandiol, 1,6-Hexandiol und 1,4-Di(-hydroxyethyl)-hydrochinon als Kettenverlängerer eingesetzt.

Geeignete Kettenverlängerer sind auch (cyclo)aliphatische Diamine, wie z.B. Isophorondiamin, Ethylendiamin, 1,2-Propylendiamin, 1,3-Propylendiamin, N-Methyl-propylen-1,3-diamin, N,N'-Dimethyl-ethylendiamin und aromatische Diamine, wie z.B. 2,4-Toluylendiamin und 2,6-Toluylen-diamin, 3,5-Diethyl-2,4-toluylendiamin und 3,5-Diethyl-2,6-toluylendiamin und primäre mono-, di-, tri- oder tetraalkylsubstituierte 4,4'-Diaminodiphenylmethane.

Daneben können auch kleinere Mengen an Triolen zugesetzt werden.

Als **Kettenabbrecher D)** können niedermolekulare Verbindungen mit einer Isocyanatreaktiven Gruppe, wie beispielsweise Monoalkohole oder Monoamine eingesetzt. Bevorzugt wird wenigstens eine Verbindung ausgewählt aus der Gruppe 1-Octanol, Stearylalkohol, 1-Butylamin oder Stearylamin, besonders bevorzugt wird 1-Octanol eingesetzt werden.

Zur Herstellung der TPU können die Aufbaukomponenten in solchen Mengen zur Reaktion gebracht werden, dass das Molverhältnis der Isocyanatgruppen aus A) zu der Summe der gegenüber Isocyanat reaktiven Gruppen in B), C) und gegebenenfalls D) ≥ 0,9:1 und ≤ 1,2:1, vorzugsweise ≥ 0,92:1 und ≤ 1,15:1 und besonders bevorzugt ≥ 0,94 und ≤ 1,10:1 beträgt.

Die nach den erfindungsgemäßen Verfahren hergestellten TPU können durch Einstellung des molaren Verhältnisses von Polyol B) zu Kettenverlängerer C) bezüglich ihrer Shore Härte in einem weiten Bereich, beispielsweise Shore A 45 bis Shore D 90, variiert werden.

Geeignete **Katalysatoren E)** können gegebenenfalls im erfindungsgemäßen Verfahren eingesetzt werden. Zur Herstellung von TPU geeignete Katalysatoren sind die gemäß dem Stand der Technik bekannten und üblichen tertiären Amine, wie z. B. Triethylamin, Dimethylcyclohexylamin, N-Methylmorpholin, N,N'-Dimethylpiperazin, 2-(Dimethylaminoethoxy)ethanol, Diazabicyclo[2,2,2]octan sowie organische Metallverbindungen, wie Titanverbindungen, Eisenverbindungen oder Zinnverbindungen, wie beispielsweise Zinndiacetat, Zinndioctoat, Zinndilaurat oder die Zinndialkylsalze aliphatischer Carbonsäuren, wie beispielsweise Dibutylzinndiacetat oder Dibutylzinndilaurat. Bevorzugte Katalysatoren sind organische Metallverbindungen, insbesondere Titanverbindungen oder Eisen- und Zinnverbindungen.
Die Gesamtmenge an Katalysatoren in den TPU beträgt in der Regel etwa 0 bis 5 Gew.-%, vorzugsweise 0,0001 bis 1 Gew.-% und besonders bevorzugt 0,0002 bis 0,5 Gew.-%.

Des Weiteren können während des erfindungsgemäßen Verfahrens auch Hilfs- und/oder Zusatzstoffe zugesetzt werden. Genannt seien beispielsweise Gleitmittel, wie Fettsäureester, deren Metallseifen, Fettsäureamide, Fettsäureesteramide und Siliconverbindungen, Antiblockmittel, Inhibitoren, Stabilisatoren gegen Hydrolyse, Licht, UV-Licht, Hitze und Verfärbung, Flammschutzmittel, Farbstoffe, Pigmente, anorganische und/oder organische Füllstoffe und Verstärkungsmittel. Verstärkungsmittel sind insbesondere faserartige Verstärkungsstoffe, wie z. B. anorganische Fasern, die nach dem Stand der Technik hergestellt werden und auch mit einer Schlichte beaufschlagt sein können. Nähere Angaben über die genannten Hilfs- und Zusatzstoffe sind der Fachliteratur, beispielsweise der Monographie von J.H. Saunders und K.C. Frisch "High Polymers", Band XVI, Polyurethane, Teil 1 und 2, Verlag Interscience Publishers 1962 bzw. 1964*,* dem Taschenbuch für Kunststoff-Additive von R. Gächter und H. Müller (Hanser Verlag München 1990) oder der DE 29 01 774 A zu entnehmen.

Weitere Zusätze, die in die TPU eingearbeitet werden können, sind Thermoplaste, beispielsweise Polycarbonate und Acrylnitril/Butadien/Styrol-Terpolymere (ABS). Auch können andere Elastomere, wie Kautschuk, Ethylen/Vinylacetatcopolymere, Styrol/Butadiencopolymere sowie andere TPU verwendet werden. Weiterhin zur Einarbeitung geeignet sind handelsübliche Weichmacher, wie beispielsweise Phosphate, Phthalate, Adipate, Sebacate und Alkylsulfonsäureester.

In einer bevorzugten Ausführungsform des erfindungsgemäßen Verfahrens werden die Komponenten A), B) und C) und gegebenenfalls D) und E) in einem One-Shot Verfahren, also in einem Schritt umgesetzt.
Dieses sogenannte One-Shot Verfahren ist besonders zur Herstellung der erfindungsgemäßen TPU geeignet. Dabei können die Komponenten B), C) und gegebenenfalls D) in einem Reaktionsgefäß vorgelegt und auf eine bestimmte Starttemperatur aufgeheizt werden. Die Starttemperatur liegt vorzugsweise bei ≥ 100 und ≤ 250 °C, besonders bevorzugt bei ≥ 100 und ≤ 220 °C Gegebenenfalls wird dann ein Katalysator E) zugesetzt und danach die Isocyanatkomponente A) in einer Portion zugegeben. Man kann die Reaktionstemperaturen und Reaktionszeiten in Abhängigkeit von der Reaktivität des Kettenverlängerers C) frei wählen. Die Reaktion wird bevorzugt bis zu einem maximal möglichen Drehmoment des Rührers ausgeführt, anschließend kann die Reaktionsschmelze auf ein Blech gegossen und danach für einen bestimmten Zeitraum, z. B. 30 bis 120 Minuten, bei einem bestimmten Temperaturbereich, z. B. 80 bis 120 °C, getempert werden. Nach Abkühlen können die erhaltenen TPU-Platten geschnitten und granuliert werden. Das erhaltene TPU Granulat kann dann thermoplastisch, z. B. in einer Spritzgießmaschine, verarbeitet werden.

Ebenfalls, jedoch weniger bevorzugt, kann das erfindungsgemäße Verfahren in mehreren Stufen, nach dem sogenannten Präpolymerverfahren durchgeführt werden. Die Komponenten A) und B) werden zur Herstellung des thermoplastischen Polyurethans nach dem Präpolymerverfahren bevorzugt in einem ersten Schritt, gegebenenfalls in Gegenwart von Katalysatoren E) bei einer Temperatur von ≥ 100 und ≤ 250 °C, vorzugsweise ≥ 100 und ≤ 220 °C, zu einem NCO-terminierten Präpolymer umgesetzt. Die Komponenten werden bevorzugt dabei innig miteinander gemischt und die Präpolymerreaktion wird vorzugsweise im Wesentlichen zum vollständigen Umsatz, bezogen auf die Polyolkomponente gebracht. Der vollständige Umsatz kann durch Titration des NCO-Gehaltes überprüft werden. In einem zweiten Schritt wird das NCO-terminierte Präpolymer dann mit den Komponenten C) Kettenverlängerer und gegebenenfalls D) Kettenabbrecher und gegebenenfalls weiterem organisches Diisocyanat, gegebenenfalls in Gegenwart von E) Katalysatoren umgesetzt. Dabei werden vorzugsweise die gleichen Reaktionstemperaturen wie bei der Herstellung des Präpolymeren gewählt. Anschließend wird wie für das One-Shot Verfahren oben beschrieben weiter verfahren.

Die TPU Herstellung kann diskontinuierlich oder kontinuierlich erfolgen. Die bekanntesten technischen Herstellverfahren dafür sind das Mischkopf-Bandverfahren (GB 1 057 018 A) und das Extruderverfahren (DE 1 964 834 A, DE 2 059 570 A und US 5 795 948 A).

Für das erfindungsgemäße Verfahren zur Herstellung von TPU eignen sich die bekannten Mischaggregate, vorzugsweise die, die mit hoher Scherenergie arbeiten. Für die kontinuierliche Herstellung seien beispielhaft genannt Cokneter, vorzugsweise Extruder, wie z.B. Zweiwellenextruder und Busskneter.

In einer bevorzugten Ausführungsform der Erfindung erfolgt die Umsetzung der Komponenten in einem Reaktionsextruder oder nach dem Mischkopf-Bandverfahren.

Ein weiterer Gegenstand der Erfindung ist ein thermoplastisches Polyurethan-Elastomer, welches erhältlich ist nach dem vorhergehend beschriebenen erfindungsgemäßen Verfahren.
Des Weiteren sind die Verwendung der nach dem erfindungsgemäßen Verfahren hergestellten thermoplastischen Polyurethan-Elastomere zur Herstellung von Spritzguss- oder Extrusionsartikeln, sowie die durch Spritzguss oder Extrusion hergestellten Artikel selbst Gegenstand der Erfindung.

Bei der Spritzgussverarbeitung verfestigen die aus den erfindungsgemäßen TPU hergestellten Teile schnell und sind deshalb gut entformbar. Die Spritzgussteile besitzen eine hohe Maßhaltigkeit und sind sehr wärmestabil.

Die erfindungsgemäßen TPU können, je nach Härtegrad, für die Herstellung von verschiedensten Anwendungsteilen verwendet werden, beispielsweise zur Herstellung von weichen, flexiblen Spritzgussteilen, wie Schuhsohlen, Griffschalen, Dichtungsteilen und Staubkappen, aber auch für härtere Teile, wie Laufrollen, Förderbänder, Skischuhe usw.. In Kombination mit anderen Thermoplasten gelangt man zu Produkten mit einem angenehmen Griffgefühl (Hart-Weich-Kombination).

Auch Extrusionsartikel, wie z.B. Profile, Filme, Folien und Schläuche, sind daraus herstellbar.

Die Erfindung soll anhand der nachfolgenden Beispiele näher erläutert werden:

### Beispiele

Zur Charakterisierung der verwendeten polymeren Polyole wurden die folgenden Methoden eingesetzt:
Der Anteil an eingebautem CO₂ in den Polyethercarbonatpolyolen wurden mittels ¹H-NMR (Firma Bruker, DPX 400, 400 MHz; Pulsprogramm zg30, Wartezeit d1 : 5s, 100 Scans) bestimmt. Die Probe wurde jeweils in deuteriertem Chloroform gelöst. Als interner Standard wurde dem deuterierten Lösungsmittel Dimethyltherephthalat (2 mg auf 2 g CDCl₃) zugegeben. Die relevanten Resonanzen im ¹H-NMR (bezogen auf CHCl₃ = 7,24 ppm) sind wie folgt:
   Carbonat, resultierend aus im Polyethercarbonatpolyol eingebautem Kohlendioxid (Resonanzen bei 5,2 bis 4,8 ppm), nicht abreagiertes PO mit Resonanz bei 2,4 ppm, Polyetherpolyol (d.h. ohne eingebautem Kohlendioxid) mit Resonanzen bei 1,2 bis 1,0 ppm.
Der Molanteil des im Polymer eingebauten Carbonates, der Polyetherpolyolanteile sowie des nicht abreagierten PO werden durch Integration der entsprechenden Signale ermittelt.

Alle in der Beschreibung und in den Beispielen angegebenen zahlenmittleren Molekulargewichte Mₙ der polymeren Polyole wurden wie folgt bestimmt: Zunächst wurde die OH-Zahl durch Veresterung und anschließende Rücktitration des überschüssigen Veresterungsreagenz mit alkoholischer Kaliumhydroxidmaßlösung gemäß DIN53240-2 experimentell ermittelt. Die OH-Zahl wird in mg KOH pro Gramm Polyol angegeben. Aus der OH-Zahl kann über die Formel zahlenmittleres Molekulargewicht Mₙ = 56 x 1000 x OH-Funktionalität / OH-Zahl das zahlenmittlere Molekulargewicht errechnet werden. Als OH-Funktionalität wurde näherungsweise F = 2 angenommen.

Im Falle niedermolekularer Polyole mit definierter Struktur gilt das aus der Summenformel errechenbare Molekulargewicht.

### Herstellung der TPU 1 und 2

In einem Reaktionsgefäß wurden gemäß Tabelle 1 das entsprechende Polyol, 1,6-Hexandiol und 1% Irganox^{®} 1010 (Handelsprodukt der BASF SE, Ludwigshafen) vorgelegt und unter Rühren auf 120 °C erwärmt. Dann wurden 30 ppm Dibutylzinndilaurat als Katalysator zugegeben. Anschließend wurde in einer Portion das auf 110 °C erwärmte Hexamethylendiisocyanat (HDI) unter Rühren zugegeben. Die Reaktionsmischung erreichte ein Temperaturmaximum von ca. 190 °C und wurde bis zum maximal möglichen Drehmoment des Rührers gerührt ca. 90 bis 105 sec. Anschließend wurde die Reaktionsmischung auf ein beschichtetes Blech gegossen und bei 80 °C 30 Minuten nachgetempert. Man erhielt nach Abkühlen eine TPU-Gießplatte.

In der Tabelle 1 werden die zur Herstellung der TPU eingesetzten Komponenten und ihre Anteile beschrieben.

**Tabelle 1: Molanteile der Einsatzkomponenten zur Synthese der TPU**

| **Beispiel** | **Polyol Nr.** | **Polyol [Mol]** | **HDI [Mol]** | **1,6-Hexandiol [Mol]** |
|---|---|---|---|---|
| **1** | 2 | 1 | 3,1 | 2,1 |
| **2*** | 1 | 1 | 3,1 | 2,1 |

| | | | | |
|---|---|---|---|---|
| Polyol 1: Acclaim^{®}2200 (Polypropylenoxidglykol mit einer OH-Zahl von 56,7 mg KOH/g (Mₙ = 1979 g/mol, von Bayer MaterialScience AG) Polyol 2: Polyethercarbonatdiol auf Basis von Propylenoxid und CO₂ mit einer OH-Zahl von 58,2 mg KOH/g (Mₙ = 1928 g/mol) und einem CO₂-Gehalt von 15,1 Gew.-%. *nicht erfindungsgemäßes Vergleichsbeispiel | | | | |

### Untersuchung der TPU1 und 2:

Die erhaltenen TPU-Gießplatten wurden geschnitten und granuliert. Das Granulat wurde mit einer Spritzgießmaschine vom Typ Arburg Allrounder 470S in einem Temperaturbereich von 180 bis 230 °C und in einem Druckbereich von 650 bis 750 bar bei einem Einspritzstrom von 10 bis 35 cm³/s zu Stäben (Formtemperatur: 40°C; Stabgröße:80x10x4mm) bzw. Platten (Formtemperatur: 40°C; Größe: 125x50x2 mm) verarbeitet.

Es wurden die folgenden Messmethoden angewandt:
Die Messung der Härte erfolgte nach DIN 53505, die Messung im Zugversuch nach ISO 37 und die Messung des Abriebs nach DIN ISO4649-A.

Dynamisch mechanische Analyse (DMA: Speicher-Zug-E-Modul):
Aus den Spritzplatten wurden Rechtecke (30 mm x 10 mm x 2 mm) gestanzt. Diese Prüfplatten wurden unter konstanter Vorlast - gegebenenfalls vom Speichermodul abhängig - periodisch mit sehr kleinen Deformationen angeregt und die auf die Einspannung einwirkende Kraft als Funktion der Temperatur und Anregungsfrequenz gemessen.

Die zusätzlich aufgebrachte Vorlast dient dazu, im Zeitpunkt negativer Deformationsamplitude die Probe noch ausreichend gespannt zu halten.
Die DMA-Messungen wurden mit dem Seiko DMS Modell 210 der Firma Seiko mit 1 HZ im Temperaturbereich von -150°C bis 200°C mit einer Heizrate von 2°C/min durchgeführt.

Zur Charakterisierung des erfindungsgemäßen Verhaltens in der Wärme wurde der Speicher-Zug-E-Modul bei +20°C und bei +60°C zum Vergleich gemessen und angegeben.

Zur Charakterisierung der Wärmestabilität ist die Temperatur T angeben, bei der 2 MPa unterschritten wird, d.h. keine stabile Form des Spritzgießteils mehr gehalten wird. Je höher der Temperaturwert ist, desto stabiler ist das TPU.

In der Tabelle 2 werden die bestimmten Eigenschaften der TPU1 und 2 beschrieben.

**Tabelle 2: Ergebnisse**

| **Beispiel** | **1** | **2*** |
|---|---|---|
| **Härte sofort [Shore A]** | 83 | 83 |
| **Abrieb [mm³]** | 58 | 84 |
| **100% Modul [MPa]** | 6,13 | 4,3 |
| **300% Modul [MPa]** | 8,65 | 6,45 |
| **Zugfestigkeit [MPa]** | 16,5 | 10,2 |
| **Zugdehnung [%]** | 728 | 751 |
| **DMA-Messung:** | | |
| **E-Modul (20°C) [MPa]** | 23 | 19 |
| **E-Modul (60°C) [MPa]** | 15 | 10 |
| **T (2 MPa) [°C]** | 119,7 | 103,6 |

| | | |
|---|---|---|
| *nicht erfindungsgemäßes Vergleichsbeispiel | | |

Das erfindungsgemäße TPU und das nicht erfindungsgemäße TPU haben eine gleich hohe Härte. Das erfindungsgemäße TPU weist ein deutlich besseres mechanisches Eigenschaftsniveau auf als das Vergleichsprodukt, was sich insbesondere im 100%-Modul, 300%-Modul und der Zugfestigkeit zeigt. Die E-Modulwerte der DMA bei +20°C und bei +60°C liegen beim Beispiel 1 deutlich höher als beim entsprechenden Vergleichsbeispiel 2, ebenfalls die Temperatur, bei der noch eine Mindestspannung von 2 MPa vorhanden ist. Das bedeutet, dass das erfindungsgemäße TPU bei hohen Temperaturen deutlich wärmestabiler ist als das Vergleichs-TPU. Auch der Abriebwert ist bei dem erfindungsgemäßen TPU deutlich geringer als beim Vergleichs-TPU.

## Patentansprüche

1. Verfahren zur Herstellung eines thermoplastischen Polyurethan-Elastomers umfassend die Umsetzung von wenigstens
A) einem organisches Diisocyanat enthaltend zwei Isocyanatgruppen mit
B) einem Polyol mit einem zahlenmittlerem Molekulargewicht Mₙ von ≥ 500 und ≤ 5000 g/mol, das mindestens zwei Isocyanat-reaktive Gruppen aufweist und
C) einem oder mehreren Kettenverlängerern mit einem Molekulargewicht von ≥ 60 und ≤ 490 g/mol, die zwei Isocyanat-reaktive Gruppen aufweisen und gegebenenfalls
D) einem monofunktionellen Kettenabbrecher, der eine Isocyanat-reaktive Gruppe aufweist und / oder
E) einem Katalysator,
wobei das Molverhältnis der Isocyanat-Gruppen aus A) zu der Summe der gegenüber Isocyanat reaktiven Gruppen in B), C) und gegebenenfalls D) ≥ 0,9:1 und ≤ 1,2:1 beträgt,
und die Komponente B) wenigstens ein Polyethercarbonatpolyol enthält, welches durch Anlagerung von Kohlendioxid und Alkylenoxiden an H-funktionelle Startsubstanzen erhältlich ist.

2. Verfahren zur Herstellung eines thermoplastischen Polyurethan-Elastomers gemäß Anspruch 1, **dadurch gekennzeichnet, dass** die Komponenten A), B) und C) und gegebenenfalls D) und E) in einem One-Shot Verfahren umgesetzt werden.

3. Verfahren zur Herstellung eines thermoplastischen Polyurethan-Elastomers nach Anspruch 1 oder 2, **dadurch gekennzeichnet, dass** das Polyethercarbonatpolyol durch Anlagerung von Kohlendioxid und Alkylenoxiden an H-funktionelle Startsubstanzen unter Verwendung von Multimetallcyanid-Katalysatoren erhältlich ist.

4. Verfahren zur Herstellung eines thermoplastischen Polyurethan-Elastomers nach einem der Ansprüche 1 bis 3, **dadurch gekennzeichnet, dass** die Alkylenoxide einen Anteil an Ethylenoxid ≥ 0 und ≤ 90 Gew.-%, bevorzugt ≥ 0 und ≤ 50 Gew.-% und besonders bevorzugt ≥ 0 und ≤ 25 Gew.-% liegt.

5. Verfahren zur Herstellung eines thermoplastischen Polyurethan-Elastomers nach einem der Ansprüche 1 bis 4, **dadurch gekennzeichnet, dass** das Polyethercarbonatpolyol einen Gehalt an Carbonatgruppen, berechnet als CO₂, von ≥ 3 und ≤ 35 Gew.-%, bevorzugt ≥ 5 und ≤ 30 Gew.-% und besonders bevorzugt ≥ 10 und ≤ 28 Gew.-% aufweist.

6. Verfahren zur Herstellung eines thermoplastischen Polyurethan-Elastomers nach einem der Ansprüche 1 bis 5, **dadurch gekennzeichnet, dass** das Polyethercarbonatpolyol ein zahlenmittleres Molekulargewicht Mₙ von ≥ 500 und ≤ 10000 g/mol, bevorzugt ≥ 500 und ≤ 7500 g/mol, besonders bevorzugt ≥ 750 und ≤ 6000 g/mol und ganz besonders bevorzugt ≥ 1000 und ≤ 5000 g/mol aufweist.

7. Verfahren zur Herstellung eines thermoplastischen Polyurethan-Elastomers nach einem der Ansprüche 1 bis 6, **dadurch gekennzeichnet, dass** das Polyethercarbonatpolyol eine mittlere OH-Funktionalität von ≥ 1,85 und ≤ 2,5, vorzugsweise ≥ 1,9 und ≤ 2,3, besonders bevorzugt ≥ 1,95 und ≤ 2,1 aufweist.

8. Verfahren zur Herstellung eines thermoplastischen Polyurethan-Elastomers nach einem der Ansprüche 1 bis 7, **dadurch gekennzeichnet, dass** das organische Diisocyanat A) wenigstens ein aliphatisches und/oder ein cycloaliphatisches Diisocyanat umfasst.

9. Verfahren zur Herstellung eines thermoplastischen Polyurethan-Elastomers nach einem der Ansprüche 1 bis 8, **dadurch gekennzeichnet, dass** die Komponente B) wenigstens ein Polyethercarbonatpolyol und wenigstens ein Polyetherpolyol enthält.

10. Verfahren zur Herstellung eines thermoplastischen Polyurethan-Elastomers nach einem der Ansprüche 1 bis 8, **dadurch gekennzeichnet, dass** die Komponente B) wenigstens ein Polyethercarbonatpolyol und wenigstens ein Polyesterpolyol enthält.

11. Verfahren zur Herstellung eines thermoplastischen Polyurethan-Elastomers nach einem der Ansprüche 1 bis 8, **dadurch gekennzeichnet, dass** die Komponente B) wenigstens ein Polyethercarbonatpolyol und wenigstens ein Polycarbonatpolyol enthält.

12. Verfahren zur Herstellung eines thermoplastischen Polyurethan-Elastomers nach einem der Ansprüche 1 bis 8, **dadurch gekennzeichnet, dass** die Komponente B) zwei voneinander verschiedene Polyethercarbonatpolyole enthält.

13. Verfahren zur Herstellung eines thermoplastischen Polyurethan-Elastomers nach einem der Ansprüche 1 bis 12, **dadurch gekennzeichnet, dass** die Komponente C) Diole, Diamine oder Diol/Diamin-Mischungen, bevorzugt Diole enthält oder daraus besteht.

14. Verfahren zur Herstellung eines thermoplastischen Polyurethan-Elastomers nach einem der Ansprüche 1 bis 13, **dadurch gekennzeichnet, dass** die Umsetzung der Komponenten in einem Reaktionsextruder oder nach dem Mischkopf-Bandverfahren erfolgt.

15. Thermoplastisches Polyurethan-Elastomer erhältlich nach einem Verfahren gemäß einem der Ansprüche 1 bis 14.

16. Verwendung der thermoplastischen Polyurethan-Elastomere nach Anspruch 15 zur Herstellung von Spritzguss- oder Extrusionsartikeln.

17. Artikel erhältlich durch Spritzguss oder Extrusion des thermoplastischen Polyurethan-Elastomers gemäß Anspruch 14.

## Claims

1. Process for the production of a thermoplastic polyurethane elastomer comprising the reaction of at least
A) one organic diisocyanate comprising two isocyanate groups, with
B) one polyol with number-average molar mass Mₙ ≥ 500 and ≤ 5000 g/mol, which has at least two isocyanate-reactive groups,
and
C) one or more chain extenders with molar mass ≥ 60 and ≤ 490 g/mol, which have two isocyanate-reactive groups,
and optionally
D) a monofunctional chain terminator which has an isocyanate-reactive group and/or
E) a catalyst
where the molar ratio of the entirety of the isocyanate groups from A) to the entirety of the groups in B), C), and optionally D) reactive toward isocyanate is ≥ 0.9:1 and ≤ 1.2:1,
and component B) comprises at least one polyether carbonate polyol obtainable via an addition reaction of carbon dioxide and alkylene oxides onto H-functional starter substances.

2. Process for the production of a thermoplastic polyurethane elastomer according to Claim 1, **characterized in that** components A), B) and C), and optionally D) and E) are reacted in a one-shot process.

3. Process for the production of a thermoplastic polyurethane elastomer according to Claim 1 or 2, **characterized in that** the polyether carbonate polyol is obtainable via an addition reaction of carbon dioxide and alkylene oxides onto H-functional starter substances with the use of multimetal cyanide catalysts.

4. Process for the production of a thermoplastic polyurethane elastomer according to any of Claims 1 to 3, **characterized in that** the proportion of ethylene oxide in the alkylene oxides is ≥ 0 and ≤ 90% by weight preferably ≥ 0 and ≤ 50% by weight, particularly preferably ≥ 0 and ≤ 25% by weight.

5. Process for the production of a thermoplastic polyurethane elastomer according to any of Claims 1 to 4, **characterized in that** the content of carbonate groups, calculated as CO₂ in the polyether carbonate polyol is ≥ 3 and ≤ 35% by weight, preferably ≥ 5 and ≤ 30% by weight, particularly preferably ≥ 10 and ≤ 28% by weight.

6. Process for the production of a thermoplastic polyurethane elastomer according to any of Claims 1 to 5, **characterized in that** the number-average molar mass Mₙ of the polyether carbonate polyol is ≥ 500 and ≤ 10000 g/mol, preferably ≥ 500 and ≤ 7500 g/mol, particularly preferably ≥ 750 and ≤ 6000 g/mol, and very particularly preferably ≥ 1000 and ≤ 5000 g/mol.

7. Process for the production of a thermoplastic polyurethane elastomer according to any of Claims 1 to 6, **characterized in that** the average OH functionality of the polyether carbonate polyol is ≥ 1.85 and ≤ 2.5, preferably ≥ 1.9 any ≤ 2.3, particularly preferably ≥ 1.95, and ≤ 2.1.

8. Process for the production of a thermoplastic polyurethane elastomer according to any of Claims 1 to 7, **characterized in that** the organic diisocyanate A) comprises at least one aliphatic and/or one cycloaliphatic diisocyanate.

9. Process for the production of a thermoplastic polyurethane elastomer according to any of Claims 1 to 8, **characterized in that** component B) comprises at least one polyether carbonate polyol and at least one polyether polyol.

10. Process for the production of a thermoplastic polyurethane elastomer according to any of Claims 1 to 8, **characterized in that** component B) comprises at least one polyether carbonate polyol and at least one polyester polyol.

11. Process for the production of a thermoplastic polyurethane elastomer according to any of Claims 1 to 8, **characterized in that** component B) comprises at least one polyether carbonate polyol and at least one polycarbonate polyol.

12. Process for the production of a thermoplastic polyurethane elastomer according to any of Claims 1 to 8, **characterized in that** component B) comprises two polyether carbonate polyols that differ from one another.

13. Process for the production of a thermoplastic polyurethane elastomer according to any of Claims 1 to 12, **characterized in that** component C) comprises, or consists of, diols, diamines, or diol/diamine mixtures, preferably diols.

14. Process for the production of a thermoplastic polyurethane elastomer according to any of Claims 1 to 13, **characterized in that** the reaction of the components takes place in a reactive extruder or by the mixing-head-belt process.

15. Thermoplastic polyurethane elastomer obtainable by a process according to any of Claims 1 to 14.

16. Use of the thermoplastic polyurethane elastomers according to Claim 15 for the production of injection-molded or extruded items.

17. Item obtainable via injection molding or extrusion of the thermoplastic polyurethane elastomer according to Claim 14.

## Revendications

1. Procédé de fabrication d'un élastomère de polyuréthane thermoplastique comprenant la réaction d'au moins
A) un diisocyanate organique, contenant deux groupes isocyanate, avec
B) un polyol ayant un poids moléculaire moyen en nombre Mₙ ≥ 500 et ≤ 5 000 g/mol, qui comprend au moins deux groupes réactifs avec les isocyanates, et
C) un ou plusieurs allongeurs de chaînes ayant un poids moléculaire ≥ 60 et ≤ 490 g/mol, qui comprennent deux groupes réactifs avec les isocyanates,
et éventuellement
D) un terminateur de chaîne monofonctionnel, qui comprend un groupe réactif avec les isocyanates, et/ou
E) un catalyseur,
le rapport en moles entre les groupes isocyanate de A) et la somme des groupes réactifs avec les isocyanates dans B), C) et éventuellement D) étant ≥ 0,9:1 et ≤ 1,2:1,
et le composant B) contenant au moins un polyéther-carbonate-polyol, qui peut être obtenu par addition de dioxyde de carbone et d'oxydes d'alkylène sur des substances de départ à fonction H.

2. Procédé de fabrication d'un élastomère de polyuréthane thermoplastique selon la revendication 1, **caractérisé en ce que** les composants A), B) et C) et éventuellement D) et E) sont mis en réaction dans un procédé one-shot.

3. Procédé de fabrication d'un élastomère de polyuréthane thermoplastique selon la revendication 1 ou 2, **caractérisé en ce que** le polyéther-carbonate-polyol peut être obtenu par addition de dioxyde de carbone et d'oxydes d'alkylène sur des substances de départ à fonction H en utilisant des catalyseurs de cyanure de plusieurs métaux.

4. Procédé de fabrication d'un élastomère de polyuréthane thermoplastique selon l'une quelconque des revendications 1 à 3, **caractérisé en ce que** les oxydes d'alkylène présentent une proportion d'oxyde d'éthylène ≥ 0 et ≤ 90 % en poids, de préférence ≥ 0 et ≤ 50 % en poids et de manière particulièrement préférée ≥ 0 et ≤ 25 % en poids.

5. Procédé de fabrication d'un élastomère de polyuréthane thermoplastique selon l'une quelconque des revendications 1 à 4, **caractérisé en ce que** le polyéther-carbonate-polyol présente une teneur en groupes carbonate, calculée en tant que CO₂, ≥ 3 et ≤ 35 % en poids, de préférence ≥ 5 et ≤ 30 % en poids et de manière particulièrement préférée ≤ 10 et ≤ 28 % en poids.

6. Procédé de fabrication d'un élastomère de polyuréthane thermoplastique selon l'une quelconque des revendications 1 à 5, **caractérisé en ce que** le polyéther-carbonate-polyol présente un poids moléculaire moyen en nombre Mₙ ≥ 500 et ≤ 10 000 g/mol, de préférence ≥ 500 etc 7 500 g/mol, de manière particulièrement préférée ≥ 750 et ≤ 6 000 g/mol, et de manière tout particulièrement préférée ≥ 1000 et ≤ 5000 g/mol.

7. Procédé de fabrication d'un élastomère de polyuréthane thermoplastique selon l'une quelconque des revendications 1 à 6, **caractérisé en ce que** le polyéther-carbonate-polyol présente une fonctionnalité OH moyenne ≥ 1,85 et ≤ 2,5, de préférence ≥ 1,9 et ≤ 2,3, de manière particulièrement préférée ≥ 1,95 et ≤ 2,1.

8. Procédé de fabrication d'un élastomère de polyuréthane thermoplastique selon l'une quelconque des revendications 1 à 7, **caractérisé en ce que** le diisocyanate organique A) comprend au moins un diisocyanate aliphatique et/ou au moins un diisocyanate cycloaliphatique.

9. Procédé de fabrication d'un élastomère de polyuréthane thermoplastique selon l'une quelconque des revendications 1 à 8, **caractérisé en ce que** le composant B) contient au moins un polyéther-carbonate-polyol et au moins un polyéther-polyol.

10. Procédé de fabrication d'un élastomère de polyuréthane thermoplastique selon l'une quelconque des revendications 1 à 8, **caractérisé en ce que** le composant B) contient au moins un polyéther-carbonate-polyol et au moins un polyester-polyol.

11. Procédé de fabrication d'un élastomère de polyuréthane thermoplastique selon l'une quelconque des revendications 1 à 8, **caractérisé en ce que** le composant B) contient au moins un polyéther-carbonate-polyol et au moins un polycarbonate-polyol.

12. Procédé de fabrication d'un élastomère de polyuréthane thermoplastique selon l'une quelconque des revendications 1 à 8, **caractérisé en ce que** le composant B) contient deux polyéther-carbonate-polyols différents l'un de l'autre.

13. Procédé de fabrication d'un élastomère de polyuréthane thermoplastique selon l'une quelconque des revendications 1 à 12, **caractérisé en ce que** le composant C) contient des diols, des diamines ou des mélanges diol/diamine, de préférence des diols, ou en est constitué.

14. Procédé de fabrication d'un élastomère de polyuréthane thermoplastique selon l'une quelconque des revendications 1 à 13, **caractérisé en ce que** la réaction des composants a lieu dans une extrudeuse de réaction ou par le procédé continu à tête de mélange.

15. Élastomère de polyuréthane thermoplastique pouvant être obtenu par un procédé selon l'une quelconque des revendications 1 à 14.

16. Utilisation des élastomères de polyuréthane thermoplastiques selon la revendication 15 pour la fabrication d'articles moulés par injection ou extrudés.

17. Article pouvant être obtenu par moulage par injection ou extrusion de l'élastomère de polyuréthane thermoplastique selon la revendication 14.
